# EUROPÄISCHE PATENTSCHRIFT

(11) **EP 4 148 303 B1**
(45) Veröffentlichungstag und Bekanntmachung des Hinweises auf die Patenterteilung: **01.05.2024**
(21) Anmeldenummer: 21195568.7
(22) Anmeldetag: 08.09.2021
(51) Int. Cl.: F16J 15/56, F16C 33/74, F16F 9/00

(54) **DICHTUNGSANORDNUNG MIT EINER STANGENDICHTUNG, AUSGABEVORRICHTUNG ZUM AUSGEBEN EINES FLIESSFÄHIGEN MEDIUMS SOWIE STANGENDICHTUNG**
SEALING ARRANGEMENT WITH A ROD SEAL, DISPENSING DEVICE FOR DISPENSING A FLUID MEDIUM AND ROD SEAL
AGENCEMENT D'ÉTANCHÉITÉ DOTÉ D'UN JOINT D'ÉTANCHÉITÉ ENTOURANT UNE TIGE MOBILE, DISPOSITIF DE DISTRIBUTION PERMETTANT DE DISTRIBUER UN MILIEU FLUIDE, AINSI QUE JOINT D'ÉTANCHÉITÉ ENTOURANT UNE TIGE MOBILE

(43) Veröffentlichungstag der Anmeldung: 15.03.2023
(73) Patentinhaber: Robatech AG, 5630 Muri (CH)
(72) Erfinder: Burger, Thomas, 6300 Zug (CH); Ineichen, Beatus, 6353 Weggis (CH); Hofer, Claudio, 6330 Cham (CH)
(74) Vertreter: Franke, Markus

(56) Entgegenhaltungen:
- DE-A1- 3 738 988
- US-A- 4 709 932
- US-A1- 2006 066 058
- US-A1- 2019 107 203

## Beschreibung

Die vorliegende Erfindung betrifft eine Dichtungsanordnung mit einer Stangendichtung zur Abdichtung einer Kavität für ein fließfähiges Medium im Bereich einer Stange. Zudem betrifft die Anmeldung eine Ausgabevorrichtung zum Ausgeben eines fließfähigen Mediums, insbesondere eine Ausgabevorrichtung zum Ausgeben eines Klebstoffs. Ferner betrifft die vorliegende Anmeldung eine Stangendichtung. Bei dem fließfähigen Medium handelt es sich vorzugsweise um einen Heißkleber oder einen Schmelzklebstoff. Bei der Ausgabevorrichtung handelt es sich insbesondere um einen Auftragskopf, insbesondere einen Spritzkopf oder Sprühkopf oder Flächenkopf.

Dichtungsanordnungen mit einer Stangendichtung kommen insbesondere in Bereichen zur Anwendung, bei denen ein Bereich eines Gehäuses, der fließfähiges Medium enthält, im Bereich einer relativ zu dem Gehäuse bewegbaren Stange abgedichtet werden soll. Bei Stangen, die eine rotierende Bewegung ausführen, insofern als Welle ausgebildet sind, finden häufig sogenannte Radial-Wellendichtringe Anwendung. Bei der Stange kann es sich aber auch um eine Stange handeln, die eine translatorische Bewegung ausführt, wie beispielsweise eine Kolbenstange einer Kolbenpumpe oder eine Ventilstange.

Aus der DE 10 2013 212 961 A1 ist eine Stangendichtung in Form eines Radialwellendichtrings bekannt, wobei dieser Radialwellendichtring dazu verwendet wird, rotierende Wellen bei ihrem Durchgang von einem Innenvolumen eines Gehäuses in ein Außenvolumen abzudichten. Das Innenvolumen enthält dabei typischerweise eine Flüssigkeit bzw. einen Schmierstoff, wie beispielsweise Motoröl bei Radialwellendichtringen, die eine Kurbelwelle eines Kraftfahrzeugs abdichten.

Im Bereich der Radialwellendichtringe ist die Verwendung von Doppellippendichtringen bekannt, wobei der Radialwellendichtring in axialer Richtung beabstandet ausgebildete, die Stange umlaufend kontaktierende Dichtlippen aufweist, wobei die eine Dichtlippe dem eigentlichen Abdichten des Innenvolumens gegen das Außenvolumen dient und die andere Dichtlippe als Staubschutz dient. Die DE 2 348 868 A offenbart eine solche Wellendichtung.

Zum Zweck der Abdichtung von translatorisch bewegbaren Stangen können grundsätzlich Dichtungsanordnungen verwendet werden, bei denen die Stangendichtung ortsfest in dem Gehäuse gelagert ist und sich die Stange relativ zu einem Dichtabschnitt der Stangendichtung, beispielsweise einer Dichtlippe der Stangendichtung, der umlaufend an der Stange anliegt, bewegt. Ein Nachteil bei dieser Art der Abdichtung ist, dass beim Langzeitbetrieb der Dichtabschnitt abgenutzt wird und infolge dessen die Dichtung ihre Dichtwirkung verlieren kann, wodurch es zu einem unerwünschten Ausdringen von fließfähigem Medium aus der Kavität im Bereich der Stange kommen kann. Zudem hat sich gezeigt, dass die zuverlässige Funktion der Dichtungsanordnung stark vom Druck und der Temperatur des in der Kavität befindlichen Mediums abhängt.

Eine besondere Anforderung an die Dichtungsanordnung stellen Temperaturzyklen dar. Während dem Aufheizen von einem festen Medium, um dieses fließfähig zu machen, können durch Materialausdehnungen lokale Druckspitzen auftreten, die ein Mehrfaches der Druckbelastung während dem Betrieb betragen können.

Insbesondere tritt dies auf, wenn nur ein Teil vom Medium verflüssigt und der Rest noch fest ist. Herkömmliche Dichtungsanordnungen können dadurch leicht beschädigt werden. Während dem Abkühlen können durch unterschiedliche Materialkontraktionen vor allem verursacht durch den Übergang vom flüssigen in den festen Zustand vom Medium zusätzlichen Belastungen der Dichtungsanordnung entstehen.

Translatorisch bewegbare Stangen finden beispielsweise Anwendung in Ausgabevorrichtungen, beispielsweise in Form von Auftragsköpfen. Solche Ausgabevorrichtungen werden zum Beispiel dafür verwendet, portionsweise fließfähiges Medium auf ein Substrat aufzubringen. Die Auftragung des fließfähigen Mediums erfolgt dabei in der Regel gesteuert, wobei die Vorrichtung eine Ausgabeöffnung zum Ausgeben des fließfähigen Mediums aufweist, wobei diese Ausgabeöffnung mittels eines Dichtabschnitts einer mit einem Aktuator bewegbaren Stange geschlossen und geöffnet werden kann. Insofern weist eine solche Ausgabevorrichtung ein verschließbares Ventil auf.

Hinsichtlich einer solchen Ausgabevorrichtung zum Ausgeben von fließfähigem Medium besteht die Problematik darin, einen Bereich, der das fließfähige Medium enthält, im Bereich der Stange abzudichten, insbesondere um zu verhindern, dass das fließfähige Medium in den Bereich eines die Stange antreibenden Aktuators bzw. des Antriebs gelangt. Zwischen der Kavität und dem Antrieb befindet sich normalerweise ein Zwischenraum, der auf der Seite der Kavität und auf der Seite vom Antrieb abgedichtet ist. Die Dichtungsanordnung soll auch verhindern, dass das Medium in diesen Zwischenraum gelangt. Falls Medium in diesen Zwischenraum gelangt, ist das ein Anzeichen, dass die Dichtungsanordnung verschlissen ist. Das Ventil kann dann mit der erkennbaren Leckage noch begrenzte Zeit weiter betrieben werden. Wenn das Medium direkt in den Antrieb gelangen würden, wäre der Antrieb in kurzer Zeit verklebt und funktionsunfähig.

Bei der erfindungsgemäßen Dichtungsanordnung wird eine Stangendichtung mit zumindest zwei Dichtlippen verwendet, um eine besonders gute Dichtwirkung zu erreichen. Die Verwendung von zumindest zwei Dichtlippen ist dahingehend als vorteilhaft anzusehen, dass bei einer Ausgabevorrichtung zum Ausgeben eines fließfähigen Mediums das fließfähige Medium in der Regel einen gegenüber der Umgebung erhöhten Druck aufweist. In der Regel weist das fließfähige Medium einen Betriebsdruck von 10 bar bis 100 bar über dem Umgebungsdruck auf, der in der Regel etwa 1 bar beträgt. Die erste Dichtlippe, die dem fließfähigen Medium zugewandt ist, dient zur Dichtung gegenüber dem Druck des Mediums. Die erste Dichtlippe kann eine geringfügige Leckage aufweisen. Die zweite Dichtlippe streift diese Leckage der ersten Dichtlippe von der Stange ab.

Bei der Verwendung von einer Dichtung mit zwei Dichtlippen hat es sich als problematisch erwiesen, dass die Anpresskraft der beiden Dichtlippen an die Stange stark vom Druck des zu dichtenden, fließfähigen Mediums abhängt. Der Verschleiß der Dichtlippen ist umso größer, je größer der Druck des Mediums ist. Zudem hat sich als problematisch erwiesen, dass die Verteilung der Anpresskräfte der beiden Dichtlippen stark vom Druck des zu dichtenden Mediums abhängig ist. Die Dichtwirkung ist umso schlechter, je unterschiedlicher diese Anpresskräfte sind. Daraus ergibt sich die Problematik, dass die Dichtwirkung der Dichtung nicht über den gesamten Druck-, Temperatur- und Viskositätsbereich leckagefrei ist. Bei einem besonders niedrigen Betriebsdruck des fließfähigen Mediums sind beispielsweise die Anpresskräfte der Dichtlippen an die Stange zu gering, um eine zuverlässige und leckagefreie Abdichtung zu gewährleisten.

Zudem besteht bei herkömmlichen Doppellippendichtungen die Problematik, dass diese in der Regel für einen engen Einsatzbereich, das heißt für einen engen Druckbereich, ausgebildet sind und daher nicht universell einsetzbar sind. Dies hat zur Folge, dass eine Dichtungsanordnung mit einer herkömmlichen Gestaltung und Anordnung der Doppellippendichtung hinsichtlich des Betriebsdrucks des fließfähigen Mediums auf einen engen Bereich begrenzt ist. Wird dieser enge Druckbereich zu höheren Drücken hin verlassen, werden die Anpresskräfte auf die Dichtlippen zu groß, so dass der Verschleiß der Dichtlippen zu groß und die Lebensdauer gering wird. Ebenso verkürzen Temperaturzyklen in Form von Aufheizen und Abkühlen bei zu hohen Drücken die Lebensdauer der Dichtungsanordnung. Wird der enge Druckbereich zu kleineren Drücken hin verlassen, werden die Anpresskräfte auf die Dichtlippen zu gering, so dass Leckage auftritt.

In der US 2006/066058 A1 wird eine Dichtungsanordnung mit Stangendichtung beschrieben, die die Merkmale des Oberbegriffs der Ansprüche 1 und 13 aufweist.

Die US 2019/107203 A1, die DE 37 38 988 A1 und die US 4 709 932 A offenbaren weiteren Stand der Technik.

Aufgabe der vorliegenden Erfindung ist es daher, eine Dichtungsanordnung, die die Merkmale des Oberbegriffs des Anspruchs 1 aufweist, derart weiterzubilden, dass die Dichtungsanordnung über einen großen Druckbereich eine zuverlässige Dichtwirkung bei dennoch geringem Verschleiß der Stangendichtung erreicht. Ferner ist es Aufgabe der Erfindung eine Ausgabevorrichtung, die dem Ausgeben des fließfähigen Mediums dient, mit einer solchen Dichtungsanordnung zu schaffen. Zudem ist es Aufgabe der Erfindung eine entsprechende Stangendichtung anzugeben. Vorzugsweise soll die Dichtungsanordnung für ausgesprochen hohe Zyklenzahlen im Bereich von 500 Mio. Hüben geeignet sein und die Lebensdauer der Dichtung soll bei den spezifischen Einsatzbedingungen extrem hoch sein.

Diese Aufgaben werden durch die Gegenstände der unabhängigen Ansprüche gelöst.

Die erfindungsgemäße Dichtungsanordnung umfasst ein Gehäuse, eine in dem Gehäuse ausgebildete Kavität, die der Aufnahme eines fließfähigen Mediums dient, und eine Stangendichtung zur Abdichtung der in dem Gehäuse ausgebildeten Kavität im Bereich einer Stange. Die Stange ist in einer axialen Richtung der Stange, insofern translatorisch, bewegbar, vorzugsweise verfahrbar, in dem Gehäuse gelagert. Das Gehäuse weist einen Lagerabschnitt und eine in dem Lagerabschnitt ortsfest gelagerte Stangendichtung auf, wobei die Stange den Lagerabschnitt und die Stangendichtung durchsetzt, sodass ein erster Stangenabschnitt der Stange und ein zweiter Stangenabschnitt der Stange auf unterschiedlichen Seiten des Lagerabschnitts angeordnet sind, wobei sich der erste Stangenabschnitt auf einer der Kavität zugewandten Seite des Lagerabschnitts befindet und wobei sich der zweite Stangenabschnitt auf einer der Kavität abgewandten Seite des Lagerabschnitts befindet. Die Stangendichtung ist auf der der Kavität zugewandten Seite des Lagerabschnitts angeordnet. Die Stangendichtung weist mindestens eine erste Dichtlippe und eine zweite Dichtlippe auf, wobei die Dichtlippen in der axialen Richtung voneinander beabstandet sind und die Stange umlaufend kontaktieren. Der Lagerabschnitt weist an seiner der Kavität zugewandten Seite eine Ableitstruktur mit einer die Stange umlaufend umschließenden Stützfläche für die Stangendichtung auf, wobei die Stangendichtung an der Stützfläche anliegt. Die Stützfläche weist einen in Richtung des zweiten Stangenabschnitts zunehmenden Durchmesser auf.

Dadurch, dass die Stützfläche einen in Richtung des zweiten Stangenabschnitts zunehmenden Durchmesser aufweist, ist die Stützfläche derart gestaltet, dass diese in Richtung der Kavität bzw. dem ersten Stangenabschnitt zuläuft, wodurch in Richtung des zweiten Stangenabschnitts auf die Stützfläche einwirkende Kräfte nach radial außen abgeleitet werden. Dies hat den Vorteil, dass aufgrund des unter Druck stehenden Mediums auf die Stangendichtung einwirkende Kräfte nach radial außen abgeleitet werden, sodass bei ansteigendem Druck des fließfähigen Mediums die daraus resultierenden Kräfte auf die Stangendichtung zumindest teilweise nach radial außen abgeleitet werden, sodass eine Anpresskraft der Dichtlippen, insbesondere der zweiten Dichtlippe, an die Stange weniger stark zunimmt, als dies der Fall wäre, wenn es sich um eine plane Stützfläche handeln würde oder wenn die Stützfläche sogar einen sich in Richtung des zweiten Stangenabschnitts abnehmenden Durchmesser aufweisen würde, insofern eine Trichterform aufweisen würde. Es hat sich gezeigt, dass durch diese Gestaltung der Stützfläche eine Anpresskraft der Dichtlippen an die Stange über einen großen Druckbereich des fließfähigen Mediums annähernd konstant gehalten werden kann und zudem ein Verhältnis der Anpresskraft der ersten Dichtlippe zu der Anpresskraft der zweiten Dichtlippe über einen großen Druckbereich des fließfähigen Mediums annähernd konstant bleibt. Zudem hat sich die erfindungsgemäße Dichtungsanordnung auch hinsichtlich einer möglichst gleichbleibenden Anpresskraft auch bei Abnutzung der Dichtlippen als vorteilhaft erwiesen.

Das fließfähige Medium weist vorzugsweise eine Temperatur von 50 °C bis 250 °C, vorzugsweise 100 °C bis 200 °C auf. Der Betriebsdruck des Mediums beträgt vorzugsweise von 10 bar bis 100 bar über dem Umgebungsdruck, der in der Regel etwa 1 bar beträgt. Vorzugsweise handelt es sich bei dem Medium um eine viskose Flüssigkeit. Die Viskosität des fließfähigen Mediums beträgt vorzugsweise 0,1 Pa s bis 100 Pa s, vorzugsweise 0,5 Pa s bis 10 Pa s.

Bei dem fließfähigen Medium handelt es sich insbesondere um einen Schmelzklebstoff. Es kann sich aber durchaus auch um Kaltleim handeln. Ferner kann es sich bei dem fließfähigen Medium auch um ein Dichtmittel oder einen Schmierstoff handeln.

Bei der Stange der Dichtungsanordnung handelt es sich vorzugsweise um eine Kolbenstange oder eine Ventilstange.

Die Dichtungsanordnung ist vorzugsweise Bestandteil einer Fördervorrichtung zum Fördern des fließfähigen Mediums. Bei der Fördereinrichtung handelt es sich vorzugsweise um eine Kolbenpumpe, wobei es sich bei der Stange um die Kolbenstange handelt, wobei das fließfähige Medium durch das Verfahren der Kolbenstange gefördert wird.

Die Dichtungsanordnung ist vorzugsweise Bestandteil einer Ausgabevorrichtung zum Ausgeben des fließfähigen Mediums. Bei der Ausgabevorrichtung handelt es sich vorzugsweise um ein Dosierventil eines Auftragskopfs.

Die Dichtungsanordnung kann durchaus Bestandteil eines Ventils, insbesondere eines Überdruckventils sein.

Das Verfahren der Stange erfolgt vorzugsweise mittels eines Antriebs, der mit der Stange, insbesondere mit dem zweiten Stangenabschnitt, wirkverbunden ist.

Die erfindungsgemäße Ausgabevorrichtung dient zum Ausgeben des fließfähigen Mediums. Die Ausgabevorrichtung weist die erfindungsgemäße Dichtungsanordnung auf, wobei die Ausgabevorrichtung eine in die Kavität mündende Ausgabeöffnung zum Ausgeben des in der Kavität befindlichen fließfähigen Mediums aus der Kavität aufweist, beispielsweise um das Medium auf ein Substrat aufzubringen, wobei die Stange zwischen einer ersten Endstellung und einer zweiten Endstellung in der axialen Richtung und umgekehrt bewegbar in dem Gehäuse gelagert ist, wobei die Stange einen Dichtabschnitt aufweist, wobei der Dichtabschnitt in der ersten Endstellung die Ausgabeöffnung verschließt und in der zweiten Endstellung beabstandet von der Ausgabeöffnung angeordnet ist, sodass fließfähiges Medium aus der Ausgabeöffnung austreten kann, wobei die Ausgabevorrichtung einen Antrieb aufweist, wobei der Antrieb mit der Stange, insbesondere mit dem zweiten Stangenabschnitt der Stange, wirkverbunden ist zum Bewegen der Stange von der ersten Endstellung in die zweite Endstellung und umgekehrt. Bei dem Antrieb kann es sich beispielsweise um einen Pneumatikzylinder oder Hydraulikzylinder handeln, wobei ein Kolben oder eine Kolbenstange des Pneumatikzylinders bzw. Hydraulikzylinders mit der Stange verbunden ist. Die Stange kann durchaus die Kolbenstange des Pneumatikzylinders bzw. Hydraulikzylinders bilden.

Bei der erfindungsgemäßen Ausgabevorrichtung zum Ausgeben eines fließfähigen Mediums handelt es sich insbesondere um eine Ausgabevorrichtung zum Ausgeben eines Klebstoffs, vorzugsweise zum Ausgeben eines Schmelzklebstoffs.

Das fließfähige Medium weist vorzugsweise eine Temperatur von 50 °C bis 250 °C, vorzugsweise 100 °C bis 200 °C auf. Der Betriebsdruck des Mediums beträgt vorzugsweise von 10 bar bis 100 bar über dem Umgebungsdruck, der in der Regel etwa 1 bar beträgt. Die Viskosität des fließfähigen Mediums beträgt vorzugsweise 0,1 Pa s bis 100 Pa s, vorzugsweise 0,5 Pa s bis 10 Pa s.

Die Ausgabevorrichtung zum Ausgeben eines fließfähigen Mediums ist insbesondere dazu ausgebildet, das fließfähige Medium intermittierend auszugeben. Eine Schaltfrequenz der Ausgabevorrichtung beträgt vorzugsweise bis zu 150 Hz, insbesondere mit einer Schaltfrequenz von 1 Hz bis 150 Hz.

Die Ausgabevorrichtung ist insbesondere als Dosiervorrichtung ausgebildet.

Ferner wird es als besonders vorteilhaft angesehen, wenn der Durchmesser der Stützfläche in Richtung des zweiten Stangenabschnitts kontinuierlich zunimmt.

Insbesondere ist vorgesehen, dass die Stützfläche frei ist von Stufen und/oder Kanten und/oder Ähnlichem.

Es ist durchaus denkbar, dass die Stützfläche mehrere in der axialen Richtung aufeinander folgende Abschnitte aufweist, beispielsweise mehrere konische Abschnitte mit unterschiedlichen Öffnungswinkeln.

Ferner wird es als besonders vorteilhaft angesehen, wenn die Stützfläche frei ist von planen Flächen, somit Flächen, die senkrecht zu einer in axialer Richtung verlaufenden Längsachse der Stange ausgebildet sind.

Es ist durchaus denkbar, dass an die Stützfläche radial außen und/oder radial innen eine weitere Fläche des Lagerabschnitts angrenzt, wobei diese weitere Fläche nicht notwendigerweise einen in Richtung des zweiten Stangenabschnitts zunehmenden Durchmesser aufweist. Es ist beispielsweise denkbar, dass radial innen und/oder radial außen eine ringförmige plane Fläche an die Stützfläche angrenzt. Anstatt oder zusätzlich zu planen Flächen bzw. Flächenabschnitten können auch Verrundungsflächen oder Radien vorhanden sein. Es ist auch durchaus denkbar, dass die Stangendichtung an dieser oder diesen weiteren Flächen anliegt.

Vorzugsweise bildet die Stützfläche die radial innerste Fläche, an der die Stangendichtung anliegt. Dadurch beginnt das Ableiten der Kräfte nach radial außen bereits nah an der Stange.

Vorzugsweise stützt sich die Stangendichtung in Richtung des zweiten Stangenabschnitts ausschließlich an der Stützfläche ab, sodass über die gesamte Kontaktfläche eine Kraftableitung nach radial außen erfolgt. Es ist aber durchaus denkbar, dass die Stangendichtung sich in Richtung des zweiten Stangenabschnitts auch an Flächenabschnitten des Lagerabschnitts abstützt, die nicht in der Art der Stützfläche ausgebildet sind. Beispielsweise könnte der Lagerabschnitt angrenzend an die Ableitstruktur plane Flächenabschnitte aufweisen, somit solche die senkrecht zu einer in axialer Richtung verlaufenden Längsachse der Stange ausgebildet sind.

Wenn sich die Stangendichtung auch an Flächenabschnitten des Lagerabschnitts abstützt, die nicht in der Art der Stützfläche ausgebildet sind, wird es als besonders vorteilhaft angesehen, wenn die an der Stützfläche anliegende Fläche der Stangendichtung größer ist als die an den übrigen Flächenabschnitten anliegende Fläche der Stangendichtung.

Vorzugsweise beträgt ein Verhältnis des größten Durchmesser der Stützfläche zu dem kleinsten Durchmesser der Stützfläche 1,5 bis 3,0.

Als besonders vorteilhaft wird es angesehen, wenn die Stützfläche durch eine Rotationsfläche beschreibbar ist, die durch Rotation einer Kurve, um eine durch die Längsachse der Stange gebildete Rotationsachse entsteht. Vorzugsweise handelt es sich bei der Kurve um eine zu der Längsachse geneigte Gerade. Die Rotationsfläche entspricht dann der Mantelfläche eines geraden Kegelstumpfs, wobei ein Öffnungswinkel des Kegelstumpfs dem Doppelten des Neigungswinkels der Geraden entspricht. Es kann sich bei der Kurve aber durchaus auch um eine gekrümmt Kurve handeln.

Es wird als besonders vorteilhaft angesehen, wenn die Stützfläche der Mantelfläche eines Kegelstumpfs mit kreisförmiger Grundfläche entspricht. Eine solche Stützfläche ist besonders einfach und kostengünstig herstellbar.

Es wird ferner als besonders vorteilhaft angesehen, wenn ein von der Stützfläche und einer Längsachse der Stange eingeschlossener Winkel kleiner 90° ist, vorzugsweise 60° bis 85° beträgt, insbesondere 70° bis 80° beträgt. Diese Winkelbereiche haben sich als besonders vorteilhaft hinsichtlich einer möglichst konstanten Anpresskraft der Dichtlippen an die Stange über einen besonders großen Druckbereich des fließfähigen Mediums erwiesen.

Es ist vorgesehen, dass die Dichtungsanordnung ein elastisch verformbares Klemmelement aufweist, wobei das Klemmelement an einer der Stange abgewandten Mantelfläche der Stangendichtung umlaufend anliegt und die Dichtlippen an die Stange andrückt. Vorzugsweise umschließt die Mantelfläche die Dichtlippen umlaufend. Zusätzlich ist es auch denkbar, dass das Klemmelement auf einer der Stützfläche der Ableitstruktur abgewandten Seite der Stangendichtung an der Stangendichtung anliegt und die Stangendichtung an die Stützfläche der Ableitstruktur andrückt. Die Verwendung eines Klemmelements hat sich hinsichtlich einer besonders guten Dichtwirkung, einer langen Lebensdauer und sicheren Lagerung der Stangendichtung in dem Gehäuse, beispielsweise dem Lagerabschnitt, als vorteilhaft erwiesen. Insbesondere kann auch die Montage besonders einfach erfolgen, beispielsweise zunächst die Stangendichtung in den Lagerabschnitt des Gehäuses eingebracht werden und anschließend mit dem Klemmelement in dem Lagerabschnitt fixiert werden.

Im Zusammenhang mit einem Klemmelement wird es als besonders vorteilhaft angesehen, wenn das Klemmelement in einer durch den Lagerabschnitt und/oder durch die Stangendichtung ausgebildeten Lagertasche gelagert ist, insbesondere ein Teilbereich des Lagerabschnitts das Klemmelement auf einer dem ersten Stangenabschnitt zugewandten Seite und somit der Kavität zugewandten Seite hintergreift.

Die Lagertasche ist vorzugsweise in Richtung der Kavität offen ausgebildet. Dadurch ist die Montage und Demontage der Stangendichtung erleichtert.

Vorzugsweise stützt sich das Klemmelement radial außen an dem Lagerabschnitt ab.

Es wird als besonders vorteilhaft angesehen, wenn die Stangendichtung einteilig ausgebildet ist.

Insbesondere besteht die Stangendichtung aus einem einzigen Material Insofern ist die Stangendichtung frei von weiteren Materialkomponenten, wie beispielsweise einem Versteifungsring, wie er beispielsweise bei Radialwellendichtringen vorgesehen ist. Bei dem einen einzigen Material kann es sich durchaus um eine Mischung von zwei unterschiedlichen Elastomeren unterschiedlicher Härte handeln.

Es ist aber auch durchaus denkbar, dass die Stangendichtung Bereiche aufweist, die aus unterschiedlichen Materialien bestehen, insbesondere unterschiedlichen Elastomeren mit unterschiedlichen Härten bestehen.

Als besonders vorteilhaft hinsichtlich eines möglichst homogenen Anpressdrucks der ersten Dichtlippe und der zweiten Dichtlippe an der Stangendichtung wird es angesehen, wenn die Mantelfläche der Stangendichtung, an der das Klemmelement anliegt, in einem Grundzustand der Stangendichtung, somit in einem unverformten Zustand, einen in Richtung des ersten Stangenabschnitts zunehmenden Durchmesser aufweist. Insofern ist die Mantelfläche im Grundzustand der Stangendichtung derart gestaltet, dass diese in Richtung des zweiten Stangenabschnitts zuläuft. Vorzugsweise entspricht die Mantelfläche der Stangendichtung der Mantelfläche eines Kegelstumpfs mit kreisförmiger Grundfläche. Als besonders vorteilhaft wird es angesehen, wenn ein von der Mantelfläche der Stangendichtung und der Längsachse der Stange eingeschlossener Winkel 2° bis 15° beträgt, insbesondere 3° bis 8°, besonders bevorzugt 4° bis 6° beträgt. Ein derartige Gestaltung begünstigt eine Verformung der Stangendichtung bei Verwendung des Klemmelements dahingehend, dass zumindest eine minimale Anpresskraft der Dichtlippen bei besonders tiefen Drücken des fließfähigen Mediums erzielt wird, damit die Dichtwirkung auch bei niedrigen Drücken des fließfähigen Mediums ausreichend ist, und dennoch bei hohen Drücken des fließfähigen Mediums die Anpresskräfte nicht zu hoch werden.

Es wird als vorteilhaft angesehen, wenn das Material des Klemmelements eine niedrigere Shore-Härte aufweist als ein Material der Stangendichtung. Die Verwendung einer niedrigeren Shore-Härte für das Klemmelement und einer höheren Shore-Härte für die Dichtung ergibt in der Kombination eine möglichst gleichbleibende Anpresskraft der Dichtlippen an die Stangendichtung über einen großen Druckbereich des fließfähigen Mediums. Zudem hat sich diese Kombination als besonders vorteilhaft hinsichtlich eines niedrigen Verschleiß der Stangendichtung erwiesen. Es wird davon ausgegangen, dass ein Klemmelement mit einer niedrigeren Shore-Härte die an der Stützfläche nach radial außen abgeleiteten Kräfte besonders gut durch Verformen aufnehmen kann und auf diese Weise zu einer über einen großen Druckbereich des fließfähigen Mediums geringen Veränderung der Anpresskräfte der Dichtlippen beiträgt.

Als besonders vorteilhaft wird es angesehen, wenn das Klemmelement als Dichtring ausgebildet ist. Der Dichtring liegt vorzugsweise radial außen dichtend an dem Lagerabschnitt und radial innen dichtend an der Stangendichtung an. Die Verwendung eines Dichtrings hat den Vorteil, dass zum einen eine Dichtwirkung gegen das Eindringen des fließfähigen Mediums in den Bereich zwischen dem Klemmelement und der Stangendichtung vermieden wird. Ein Eindringen von fließfähigem Medium in diesen Bereich ist insbesondere dann nachteiliger, wenn es sich bei dem fließfähigen Medium um ein Medium handelt, das einem Alterungsprozess oder gar einem Aushärtungsprozess unterliegt, wie dies beispielsweise bei Schmelzklebstoff der Fall ist. Ausgehärtetes Medium könnte sich beispielsweise negativ auf die Elastizität bzw. die Verformbarkeit der Stangendichtung auswirken, insbesondere wenn Schmelzklebstoff in der Lagertasche aushärtet, da dann das Volumen der Lagertasche nicht mehr vollständig für die Verformung der Stangendichtung zur Verfügung steht.

Vorzugsweise weist der Dichtring im Querschnitt vier Vorsprünge auf. Der Dichtring ist insbesondere als X-Ring oder Quadring ausgebildet.

Es ist vorgesehen, dass das Klemmelement zwei nach radial innen hervorstehende Vorsprünge aufweist, wobei der Dichtring derart angeordnet ist, dass der eine Vorsprung auf die erste Dichtlippe einwirkt, derart, dass die erste Dichtlippe an die Stange angedrückt wird, und der andere Vorsprung auf die zweite Dichtlippe einwirkt, derart, dass die zweite Dichtlippe an die Stange angedrückt wird. Dadurch wird eine besonders gute und homogene Dichtwirkung sowie eine besonders konstante Anpresskraft der Dichtlippen über einen großen Druckbereich des fließfähigen Mediums gewährleistet.

Als besonders vorteilhaft wird es angesehen, wenn das Klemmelement radial außen den Lagerabschnitt unmittelbar kontaktiert.

Es wird ferner als besonders vorteilhaft angesehen, wenn zwischen der Stangendichtung und dem Lagerabschnitt ein in Richtung der Kavität offener Hohlraum gebildet ist oder die Stangendichtung einen in Richtung der Kavität offenen Hohlraum aufweist, wobei das Klemmelement, insbesondere der Dichtring, diesen Hohlraum gegenüber der Kavität abdichtet, insbesondere das Klemmelement diesen Hohlraum ausfüllt. Der Hohlraum kann insbesondere die Lagertasche oder einen Teilbereich der Lagertasche bilden.

Es wird als besonders vorteilhaft angesehen, wenn ein an der Stützfläche anliegender Anlageabschnitt der Stangendichtung nach radial außen gegenüber einem in der axialen Richtung angrenzenden Dichtabschnitt der Stangendichtung, der die Dichtlippen aufweist, hervorsteht.

Vorzugsweise beträgt ein Verhältnis eines maximalen Außendurchmessers des Anlageabschnitts zu einem maximalen Außendurchmesser des Dichtabschnitts 1,2 bis 2.

Hinsichtlich des Lagerabschnitts wird es als besonders vorteilhaft angesehen, wenn der Lagerabschnitt Bestandteil einer lösbar mit dem übrigen Gehäuse verbundenen Lagerhülse ist, wobei die Stange die Lagerhülse durchsetzt.

Vorzugsweise bestehen der Dichtring und/oder die Stangendichtung aus einem Elastomer, vorzugsweise aus unterschiedlichen Elastomeren.

Vorzugsweise weist ein Material der Stangendichtung eine Härte von 50 Shore D bis 65 Shore D auf und/oder ein Material des Klemmelements weist eine Härte von 60 Shore A bis 80 Shore A auf.

Ein Hubweg der Stange, bspw. von der ersten in die zweite Endstellung, beträgt vorzugsweise zumindest 0,2 mm, insbesondere 0,2 mm bis 2 mm, besonders bevorzugt 0,3 mm bis 0,5 mm.

Ein Durchmesser der Stange beträgt vorzugsweise 1 mm bis 12 mm, insbesondere 2,5 mm bis 6 mm.

Bei dem Material der Stangendichtung handelt es sich insbesondere um PTFE, gefülltes PTFE oder Fluorpolymere. Bei dem Material des Klemmelements handelt es sich insbesondere um Fluorkautschuk, bevorzugt Fluorkarbonkautschuk (FKM).

Die erfindungsgemäße Stangendichtung dient zur Verwendung bei der erfindungsgemäßen Dichtungsanordnung und weist eine in einer axialen Richtung verlaufende Mittelachse und mindestens zwei in der axialen Richtung voneinander beabstandete, die Mittelachse umlaufend umschließende, nach radial innen gerichtete Dichtlippen auf, wobei die Stangendichtung zwei in der axialen Richtung gegenüberliegende Enden aufweist, wobei das eine Ende der zwei Enden eine die Mittelachse umlaufend umschließende Endfläche zum endseitigen Abstützen der Stangendichtung an der Stützfläche der Ableitstruktur aufweist, wobei die Endfläche einen in Richtung des anderen Endes der zwei Enden abnehmenden Durchmesser aufweist, Insofern läuft die Endfläche trichterförmig in Richtung des anderen Endes zu. Vorzugsweise entspricht die Endfläche der Mantelfläche eines Kegelstumpfs mit kreisförmiger Grundfläche. Insbesondere beträgt ein zwischen der Kegelachse und einer Mantellinie des Kegels eingeschlossener Winkel 60° bis 85°.

Es hat sich als besonders vorteilhaft erwiesen, wenn die Endfläche in die zweite Dichtlippe übergeht.

Vorzugsweise weist die Stangendichtung auf einer der Mittelachse abgewandten Seite, somit radial außen, eine die Mittelachse umlaufend umschließende Mantelfläche auf, wobei die Mantelfäche einen in Richtung des anderen Endes zunehmenden Durchmesser aufweist. Insofern läuft die Mantelfäche in Richtung des einen Endes zu.

Vorzugsweise ist die zweite Dichtlippe in der axialen Richtung zwischen der ersten Dichtlippe und der Endfläche ausgebildet.

Vorzugsweise sind die Endfläche und die Mantelfläche der Stangendichtung in der axialen Richtung beabstandet voneinander ausgebildet und überlappen somit nicht. Vorzugsweise ist die zweite Dichtlippe in der axialen Richtung zwischen der Mantelfläche der Stangendichtung und der Endfläche der Stangendichtung ausgebildet. Dies hat sich als besonders vorteilhaft hinsichtlich der Dichtwirkung bei unterschiedlichen Mediumsdrücken erwiesen.

Es wird als vorteilhaft angesehen, wenn ein von der Endfläche und der Mittelachse eingeschlossener Winkel 60° bis 85° beträgt, insbesondere 70° bis 80° beträgt, und/oder ein von der Mantelfläche und der Mittelachse eingeschlossener Winkel 2° bis 15° beträgt, insbesondere 3° bis 8°, besonders bevorzugt 4° bis 6° beträgt.

Der Anlageabschnitt der Stangendichtung weist zwei die Mittelachse umlaufend umschließende Rücksprünge auf, die zur Aufnahme
von umlaufenden Vorsprüngen eines als Quadring ausgebildeten Klemmelements dienen.

Als besonders vorteilhaft wird es angesehen, wenn die Stangendichtung und/oder der Lagerabschnitt und/oder die Stützfläche der Ableitstruktur und/oder die Endfläche der Stangendichtung und/oder die Mantelfläche der Stangendichtung rotationssymmetrisch zu der Längsachse der Stange bzw. der Mittelachse der Stangendichtung ausgebildet sind.

Ferner wird es als besonders vorteilhaft angesehen, wenn in einem Grundzustand der Stangendichtung, somit in einem Zustand, in dem die Stangendichtung nicht in dem Lagerabschnitt gelagert ist, ein Verhältnis zwischen einem ersten Innendurchmesser im Bereich der ersten Dichtlippe und einem zweiten Innendurchmesser im Bereich der zweiten Dichtlippe 0,9 bis 1,1 beträgt, vorzugsweise 1,0 beträgt.

Vorzugsweise weisen die Dichtlippen unterschiedliche Geometrien auf.

Die Ausführungen zu der erfindungsgemäßen Dichtungsanordnung und deren vorteilhaften Ausführungsformen gelten entsprechend für die Ausgabevorrichtung und die Stangendichtung. Die Ausführungen zu der erfindungsgemäßen Ausgabevorrichtung und deren vorteilhaften Ausführungsformen gelten entsprechend für die Dichtungsanordnung und die Stangendichtung. Die Ausführungen zu der erfindungsgemäßen Stangendichtung und deren vorteilhaften Ausführungsformen gelten entsprechend für die Dichtungsanordnung und die Ausgabevorrichtung.

In den nachfolgenden Figuren wird die Erfindung anhand eines Ausführungsbeispiels näher erläutert, ohne auf dieses beschränkt zu sein. Es zeigen:
- Fig. 1: eine Ausführungsform einer Ausgabevorrichtung mit einer erfindungsgemäßen Dichtungsanordnung in einer Schnittansicht,
- Fig. 2a: die Dichtungsanordnung der Ausgabevorrichtung gemäß Fig. 1 in einer Schnittansicht,
- Fig. 2b: ein Teilbereich der Fig. 2a in einer vergrößerten Darstellung,
- Fig. 3: eine Komponente der Dichtungsanordnung gemäß Fig. 2a, nämlich eine Stangendichtung in einer perspektivischen Ansicht,
- Fig. 4: die Stangendichtung gemäß Fig. 3 in einer Schnittansicht,
- Fig. 5: eine Komponente der Dichtungsanordnung gemäß Fig. 2a, nämlich eine Lagerhülse, in einer Schnittansicht,
- Fig. 6: ein Diagramm betreffend eine Entwicklung der kumulierten Lippenkraft im Bereich der jeweiligen Dichtlippe bei zunehmendem Druck des fließfähigen Mediums bei einer Dichtungsanordnung gemäß Fig. 7,
- Fig. 7: die Dichtungsanordnung betreffend das Diagramm in Fig. 6,
- Fig. 8: ein Diagramm betreffend eine Entwicklung der kumulierten Lippenkraft im Bereich der jeweiligen Dichtlippe bei zunehmendem Druck des fließfähigen Mediums bei einer Dichtungsanordnung gemäß Fig. 9,
- Fig. 9: die Dichtungsanordnung betreffend das Diagramm in Fig. 8,
- Fig. 10: Ein Teilbereich der Fig. 1 in einer vergrößerten Darstellung,
- Fig. 11: ein Diagramm betreffend einen Durchmesser einer Stützfläche einer Ableitstruktur in Abhängigkeit von der axialen Position.

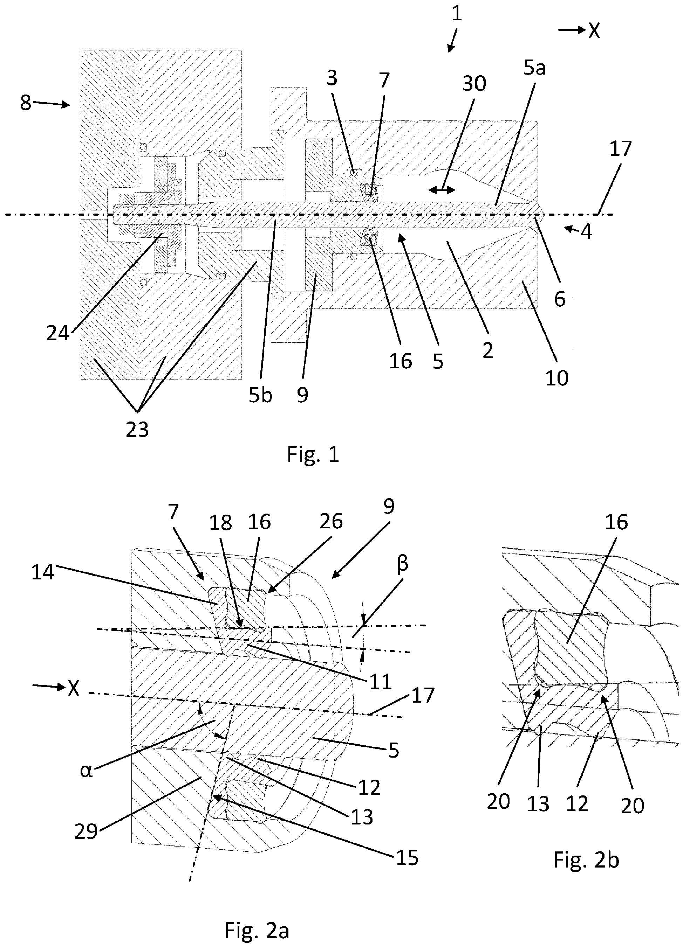

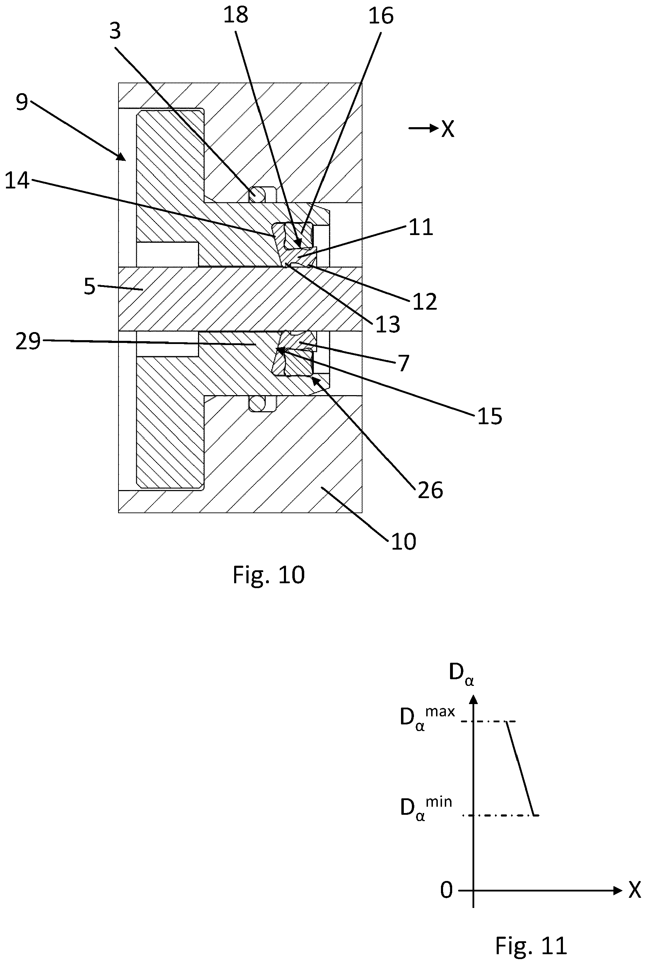

Die Fig. 1 zeigt eine Ausgabevorrichtung 1 zum Ausgeben eines fließfähigen Mediums, vorliegend eine Klebstoffausgabevorrichtung, mit einer Ausführungsform der erfindungsgemäßen Dichtungsanordnung. Die Dichtungsanordnung als solche ist in den Fig. 2a und 10 näher dargestellt.

Die Ausgabevorrichtung 1 dient zum intermittierenden Ausgeben des Klebstoffs mit einer Schaltfrequenz von bis zu 150 Hz. Die Ausgabevorrichtung 1 weist ein Gehäuse 9, 10 mit einer Kavität 2 zur Aufnahme des fließfähigen Mediums auf. Das Gehäuse 9, 10 weist ein erstes Gehäuseteil 10 und zweites Gehäuseteil 9 in Form einer Lagerhülse auf, wobei zwischen dem Gehäuseteil 10 und dem Gehäuseteil 9 die Kavität 2 zur Aufnahme des fließfähigen Mediums ausgebildet ist. Eine in die Kavität 2 mündende Ausgabeöffnung 4 zum Ausgeben des fließfähigen Mediums ist in dem Gehäuseteil 10 ausgebildet. Die Ausgabeöffnung 4 dient dem Auftragen des fließfähigen Mediums auf ein nicht näher dargestelltes Substrat. Das Gehäuseteil 9 ist mit dem Gehäuseteil 10 lösbar verbunden, vorliegend mit dem Gehäuseteil 10 verschraubt. Zwischen dem Gehäuseteil 9 und dem Gehäuseteil 10 ist eine statische Dichtung, vorliegend ein Dichtring 3, angeordnet, zum Abdichten der Kavität 2 im Bereich zwischen den beiden Gehäuseteilen 9, 10.

Die Ausgabevorrichtung 1 weist eine Stange 5 auf, wobei die Stange 5 zwischen einer ersten Endstellung und einer zweiten Endstellung in der axialen Richtung X entlang einer Längsachse 17 der Stange 5 und umgekehrt bewegbar in dem Gehäuse 9, 10 gelagert ist, wobei die Stange 5 das als Lagerhülse ausgebildete zweite Gehäuseteil 9 in der axialen Richtung X durchsetzt. Die Bewegung der Stange 5 ist durch den Doppelpfeil 30 in der Fig. 1 kenntlich gemacht. Ein erster Stangenabschnitt 5a der Stange 5 ist auf einer der Kavität 2 zugewandten Seite des zweiten Gehäuseteils 9 angeordnet und ein zweiter Abschnitt 5b der Stange 5 ist auf einer der Kavität 2 abgewandten Seite des zweiten Gehäuseteils 9 angeordnet. Je nach Stellung der Stange 5 ist ein unterschiedlich großer Anteil der Stange 5 auf der jeweiligen Seite des zweiten Gehäuseteils 9 angeordnet. Der erste Stangenabschnitt 5a weist einen Dichtabschnitt 6 auf, wobei der Dichtabschnitt 6 in der ersten Endstellung die Ausgabeöffnung 4 auf einer der Kavität 2 abgewandten Seite verschließt. In der zweiten Endstellung ist der Dichtabschnitt 6 beabstandet von der Ausgabeöffnung 4 angeordnet. Da das in der Kavität 2 befindliche, fließfähige Medium unter einem gegenüber der Umgebung erhöhten Druck steht, tritt in der zweiten Endstellung fließfähiges Medium aus der Ausgabeöffnung 4 aus. Somit wird in der zweiten Endstellung das fließfähige Medium ausgegeben. Vorliegend wird mit einer relativ hohen Schaltfrequenz im Bereich von 1 Hz bis 150 Hz geschaltet, wobei sich die Schaltfrequenz auf den zeitlichen Abstand von zwei aufeinander folgenden ersten Endstellungen bezieht. Somit korrespondiert eine Schaltfrequenz von 1 Hz zu einem Klebstoffauftrag, der eine 1 Sekunde dauert. Bei höheren Schaltfrequenzen ist die Dauer des jeweiligen Klebstoffauftrags entsprechend verkürzt. Es ist durchaus denkbar, dass der zeitliche Abstand zwischen zwei Klebstoffaufträgen mehrere Sekunden beträgt. Dies kann beispielsweise notwendig sein, wenn mehrere Substrate auf einen Förderband nacheinander an der Ausgabeöffnung vorbei gefördert werden, um auf diese das fließfähige Medium aufzubringen. Die Ausgabevorrichtung ist dabei in der Regel derart getaktet, dass fließfähiges Medium nur dann ausgegeben wird, wenn sich ein Substrat im Auftragsbereich der Ausgabeöffnung befindet. Die Fig. 1 zeigt die Stange 5 in der ersten Endstellung.

Die Ausgabevorrichtung 1 weist einen pneumatischen Antrieb 8 mit einem mit dem Gehäuse 10 verbundenen Antriebsgehäuse 23 auf, wobei die Stange 5 mit dem zweiten Stangenabschnitt 5b in das Antriebsgehäuse 23 hineinragt. Der Antrieb 8 ist mit dem zweiten Stangenabschnitt 5b der Stange 5 wirkverbunden zum Bewegen der Stange 5 von der ersten Endstellung in die zweite Endstellung und umgekehrt. Vorliegend ist ein mit Druckluft beaufschlagbarer Kolben 24 des Antriebs 8 im Bereich eines freien Endes des zweiten Stangenabschnitt 5b mit dem zweiten Stangenabschnitt 5b verbunden.

In einem Lagerabschnitt 9, der vorliegend durch die Lagerhülse gebildet ist, ist eine Stangendichtung 7 ortsfest gelagert, wobei die Stange 5 die Stangendichtung 7 in der axialen Richtung X durchsetzt. Die Stange 5 bewegt sich relativ zu dem Gehäuse 9, 10 sodass die Stangendichtung 7 eine dynamische Dichtung bildet. Die Stangendichtung 7 weist einen die Stange 5 umlaufend umschließenden Dichtabschnitt 11 mit einer ersten Dichtlippe 12 und einer zweiten Dichtlippe 13 auf. Die erste Dichtlippe 12 ist dabei zwischen der Kavität 2 und der zweiten Dichtlippe 13 ausgebildet. Dementsprechend sind die Dichtlippen 12, 13 in der axialen Richtung X voneinander beabstandet. Die beiden Dichtlippen 12, 13 kontaktieren die Stange 5 umlaufend. Die Stange 5 bewegt sich bei ihrer translatorischen Bewegung relativ zu den Dichtlippen 12, 13.

Der Lagerabschnitt 9 weist eine in Richtung der Kavität 2 hervorstehenden Ableitstruktur 29 auf, wobei die Ableitstruktur 29 eine Stützfläche 15 aufweist, somit eine Fläche, die die Stange 5 umlaufend umschließt und auf einer der Stange 5 abgewandten Außenseite der Ableitstruktur 29 ausgebildet ist. Die Stangendichtung 7 weist ferner einen die Stange 5 umlaufend umschließenden Anlageabschnitt 14 zum axialen Abstützen der Dichtung 7 an der die Stange 5 umlaufend umschließenden Stützfläche 15 der Ableitstruktur 29 auf. Die Stützfläche 15 ist dabei derart gestaltet, dass in axialer Richtung X auf die Stützfläche 15 einwirkende Kräfte, wie sie aufgrund des unter Druck stehenden Mediums vorliegen, nach radial außen abgeleitet werden. Zu diesem Zweck weist die Stützfläche 15 einen in Richtung des zweiten Stangeabschnitts 5b, somit entgegengesetzt zu der axialen Richtung X, d.h. in negative X-Richtung, zunehmenden Durchmesser D_{α} auf. Konkret ist die Stützfläche 15 derart ausgebildet, dass die Stützfläche 15 der Mantelfläche eines geraden Kegelstumpfs mit kreisförmiger Grundfläche entspricht, dessen Spitze in Richtung des ersten Stangenabschnitts 5a zeigt. Bei der Stützfläche 15 handelt es sich somit um eine in Richtung der Kavität 2 konisch zulaufende Fläche. Ein von der Stützfläche 15 und der Längsachse 17 der Stange 5 eingeschlossener Winkel α beträgt vorliegend 75°. Dementsprechend beträgt ein Öffnungswinkel des Kegelstumpfs 150°. Die Entwicklung des Durchmesser D_{α} in Abhängigkeit von der Position in der axialen Richtung X ist in der Fig. 11 schematisch gezeigt. Der Durchmesser D_{α} nimmt mit zunehmendem X-Wert von einem Maximalwert D_{α}^{max} linear auf einen Minimalwert D_{α}^{min} ab. Dementsprechend nimmt der Durchmesser D_{α} der Stützfläche 15 in Richtung des zweiten Stangenabschnitts 5b zu. Ein Verhältnis von D_{α}^{max} zu D_{α}^{min} beträgt vorliegend etwa 2,2.

Die Stangendichtung 7 ist vorliegend mittels eines elastisch verformbaren Klemmelements 16, das als Quadring 16 ausgebildet ist, lagefixiert in dem Lagerabschnitt 9 gehalten. Der Quadring 16 liegt auf einer der Stange 5 abgewandten, nach radial außen weisenden, Mantelfläche 18 des Dichtabschnitts 11 umlaufend an dem Dichtabschnitt 11 an und die Dichtlippen 12, 13 werden durch Vorsprünge 20 des Quadrings 16 an die Stange 5 angedrückt, wie insbesondere der Fig. 2b zu entnehmen ist. Der Quadring 16 liegt zudem auf einer der Stützfläche 15 abgewandten Seite an dem Anlageabschnitt 14 der Stangendichtung 7 an, wobei der Quadring 16 den Anlageabschnitt 14 an die Stützfläche 15 der Ableitstruktur 29 andrückt. Wie insbesondere der Fig. 2a zu entnehmen ist, ist der Quadring 16 in einer zwischen dem Lagerabschnitt 9 und der Stangendichtung 5 ausgebildeten Lagertasche 25 gelagert, wobei diese Lagertasche 25 in Richtung der Kavität 2 offen ausgebildet ist. Ein Teilbereich des Lagerabschnitts 9 bildet einen Hinterschnitt 26, wobei dieser Hinterschnitt 26 den Quadring 16 auf einer der Kavität 2 zugewandten Seite hintergreift und somit in der axialen Richtung X fixiert. Der Quadring 16 füllt diese Lagertasche 25, die einen Hohlraum bildet, in dem eingebauten Zustand vollständig aus. Dadurch wird verhindert, dass fließfähiges Medium in diesen Hohlraum und somit zwischen das als Dichtring, nämlich als Quadring, ausgebildete Klemmelement 16 und die Stangendichtung 7 eindringt. Das als Dichtring ausgebildete Klemmelement 16 übernimmt somit zwei Aufgaben, nämlich die Aufgabe, die Dichtlippen 12, 13 an die Stange 5 anzudrücken und die Aufgabe einer statischen Dichtung zwischen Lagerabschnitt 9 und Stangendichtung 7.

Der Dichtring 16 weist sowohl in seiner axialen Abmessung als auch in seiner radial Abmessung gegenüber den Abmessungen der Lagertasche ein Übermaß auf, sodass im montierten Zustand der Dichtring 16 in der ringförmigen Lagertasche mit Presssitz gefügt ist.

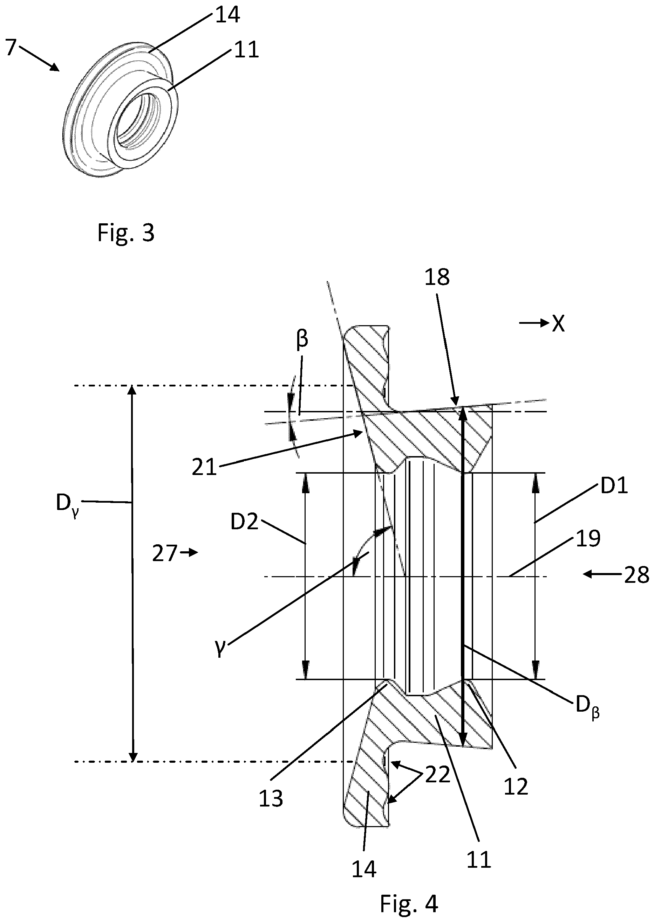

Die Stangendichtung 7 als solche ist in den Fig. 3 und 4 in einem Grundzustand, somit einem unverformten Zustand, dargestellt. Die Stangendichtung 7 ist rotationssymmetrisch zu einer Mittelachse 19 der Stangendichtung 7 ausgebildet. Eine Endfläche 21, die im eingebauten Zustand an der Stützfläche 15 der Ableitstruktur 29 zur Anlage kommt, weist einen Durchmesser D_{γ} auf, der in Richtung des anderen Endes 28 der zwei Enden 27, 28 abnimmt. Die Endfläche 21 schließt mit der Mittelachse 19 der Stangendichtung 7 einen Winkel γ ein, der vorliegend 75° beträgt und somit identisch groß wie der Winkel α ist. Die Endfläche 21 der Stangendichtung 7 und die Stützfläche 15 der Ableitstruktur 29 sind vorliegend durch die Mantelfläche desselben Kegelstumpfs beschreibbar, wobei eine Flächennormale der Endfläche 21 der Stangendichtung 7 nach radial innen weist und eine Flächennormale der Stützfläche 15 der Ableitstruktur 29 nach radial außen weist.

Die Stangendichtung 7 als solche ist derart gestaltet, dass die Mantelfläche 18 des Dichtabschnitts 11 einen sich in der axialen Richtung X in Richtung des ersten Stangenabschnitts 5a und somit in Richtung der Kavität 2 erweiternden Querschnitt aufweist, wobei die Mantelfläche 18 der Mantelfläche eines Kegelstumpfs mit kreisförmiger Grundfläche entspricht, dessen Spitze in Richtung des zweiten Stangenabschnitts 5b zeigt. Dementsprechend nimmt ein Durchmesser D_{β} der Mantelfläche 18 in Richtung des anderen Endes 28 zu. Ein von der Mantelfläche 18 der Stangendichtung 7 und der Mittelachse 19 der Stangendichtung 7 eingeschlossener Winkel β beträgt vorliegend 5°. Wenn die Stangendichtung 7 in der Dichtungsanordnung eingebaut ist, wirkt der Dichtring 16 auf die Mantelfläche 18 der Stangendichtung 7 ein, und presst unter Verformung der Mantelfläche 18 der Stangendichtung 7 die Dichtlippen 12, 13 an die Stange 5 an.

Wie insbesondere der Fig. 4 zu entnehmen ist, sind die Mantelfläche 18 der Stangendichtung 7 und die Endfläche 21 der Stangendichtung 7 in der axialen Richtung X voneinander beabstandet und überlappen somit nicht. In der axialen Richtung ist die zweite Dichtlippe 13 zwischen der Mantelfläche 18 der Stangendichtung 7 und der Endfläche 21 der Stangendichtung 7 ausgebildet.

Ein Verhältnis zwischen einem ersten Innendurchmesser D1 im Bereich der ersten Dichtlippe 12 und einem zweiten Innendurchmesser D2 im Bereich der zweiten Dichtlippe 13 beträgt vorliegend 1,0. Die Innendurchmesser D1 und D2 sind vorliegend geringfügig kleiner als der Durchmesser der Stange 5.

Im Bereich des Anlageabschnitts 14 weist die Stangendichtung 7 auf der der Endfläche 21 abgewandten Seite des Anlageabschnitts 14 ausgebildete, die Mittelachse 19 umlaufend umschließende Rücksprünge 22 auf, wobei diese Rücksprünge 22 der Aufnahme von umlaufenden Vorsprüngen 20 des Quadrings 16 dienen.

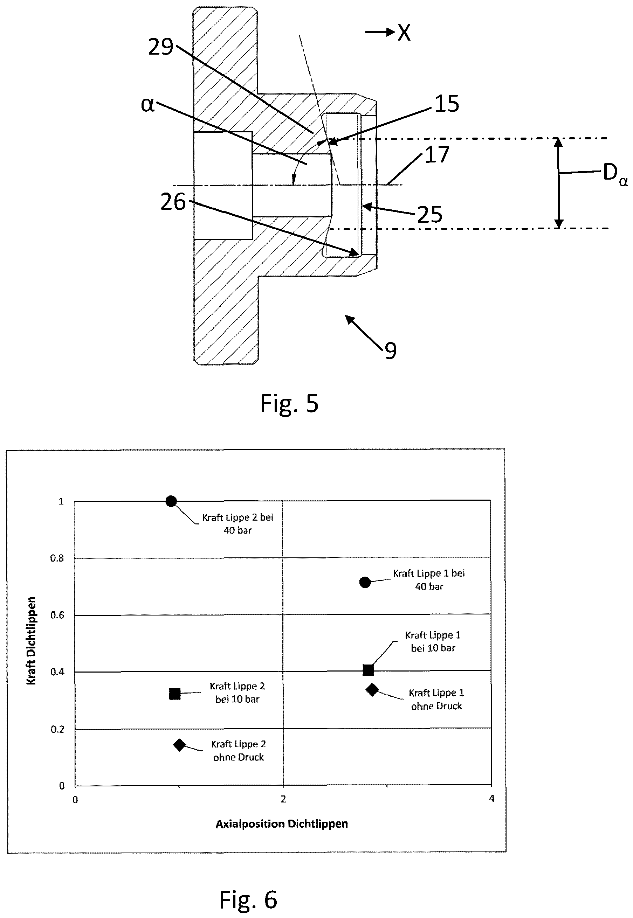

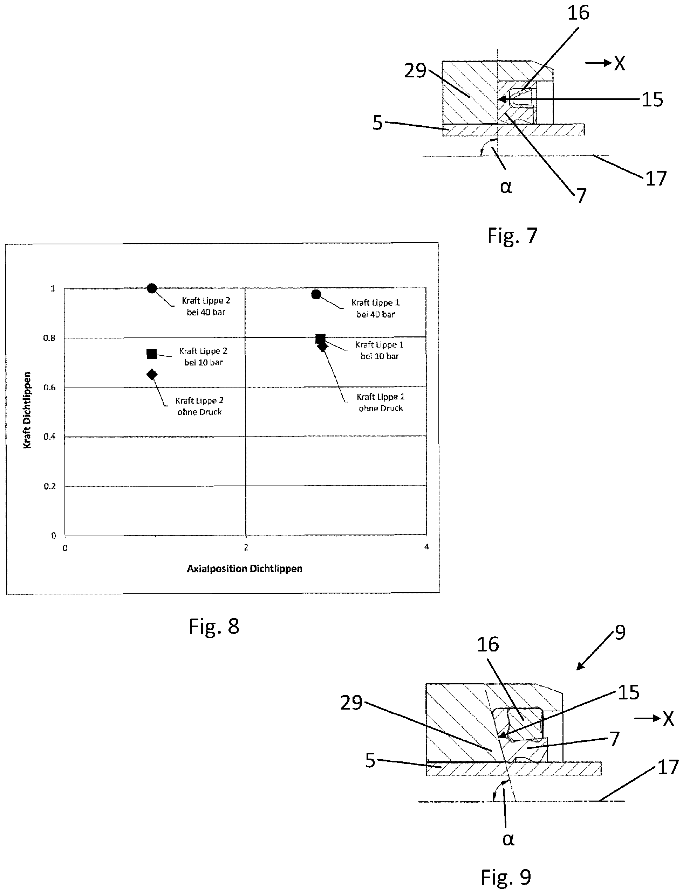

Die Vorteile der erfindungsgemäßen Dichtungsanordnung, insbesondere der konischen Stützfläche 15 bzw. konischen Endfläche 21, wird bei einem Vergleich der in den Fig. 6 und 8 dargestellten Diagramme deutlich.

Die Fig. 6 betrifft dabei eine Dichtungsanordnung, die im Gegensatz zu der erfindungsgemäßen Lösung keine konische Stützfläche aufweist, an der sich die Stangendichtung abstützt, sondern eine plane Stützfläche für die Stangendichtung 7 aufweist, die der Einfachheit halber in der Figur 6 ebenfalls mit dem Bezugszeichen 15 versehen ist. Der eingeschlossene Winkel α beträgt dementsprechend 90°. Ferner handelt es sich bei dem Klemmelement 16 nicht um einen Quadring, sondern um eine ringförmige Vorspannfeder aus Metall mit einem radial inneren und einem radial äußeren Schenkel, die endseitig miteinander verbunden sind. Die entsprechende Dichtungsanordnung ist schematisch in der Fig. 7 gezeigt. Das Diagramm zeigt die betragsmäßig aufaddierte Anpresskraft im Bereich der ersten Dichtlippe 12, wobei sich die erste Dichtlippe 12 in der axialen Richtung an der Position von etwa 3,0 befindet. Ferner zeigt das Diagramm die betragsmäßig aufaddierte Anpresskraft im Bereich der zweiten Dichtlippe 13, wobei sich die zweite Dichtlippe 13 in der axialen Richtung an der Position von etwa 1,0 befindet. Dem Diagramm ist entnehmbar, dass mit zunehmendem Druck des fließfähigen Mediums, vorliegend 0 bar ("ohne Druck"), 10 bar und 40 bar über dem Umgebungsdruck, der etwa 1 bar beträgt, sich die Anpresskraft der beiden Dichtlippen 12, 13 auf die Stange 5 deutlich erhöht. Die Werte für die Anpresskraft sind auf die Anpresskraft der zweiten Dichtlippe 13 bei einem Mediumsdruck von 40 bar normiert. Zudem entwickeln sich die Anpresskraft im Bereich der ersten Dichtlippe 12 und die Anpresskraft im Bereich der zweiten Dichtlippe 13 deutlich unterschiedlich. Beispielsweise ist die Anpresskraft im Bereich der zweiten Dichtlippe 13 bei kleinen Mediumsdrücken kleiner als die Anpresskraft im Bereich der ersten Dichtlippe 12, wohingegen bei höheren Mediumsdrücken die Anpresskraft im Bereich der zweiten Dichtlippe 13 die Anpresskraft im Bereich der ersten Dichtlippe 12 übersteigt. Bei niedrigen Mediumsdrücken sind die Anpresskräfte für beide Dichtlippen 12, 13 relativ niedrig. Sie liegen bei einem drucklosen Medium, somit einem Medium dessen Druck nicht gegenüber dem Umgebungsdruck erhöht ist, im Bereich von etwa 0,1 bzw. 0,35. Über den untersuchten Druckbereich von 0 bar bis 40 bar verändern sich die Anpresskräfte im Bereich der zweiten Dichtlippe 13 relativ stark, nämlich um den Faktor 10.

Das Diagramm der Fig. 8 betrifft eine erfindungsgemäße Dichtungsanordnung gemäß Figur 9. Die Werte für die Anpresskraft sind wiederum auf die Anpresskraft der zweiten Dichtlippe 13 bei einem Mediumsdruck von 40 bar normiert. Der Absolutwert der Anpresskraft der zweiten Dichtlippe 13 bei einem Mediumsdruck von 40 bar bei der Anordnung gemäß Fig. 9 ist annähernd identisch mit dem Absolutwert der Anpresskraft der zweiten Dichtlippe 13 bei einem Mediumsdruck von 40 bar bei der Anordnung gemäß Fig. 7. Die Anpresskräfte der ersten und der zweiten Dichtlippe 12, 13 nehmen bei der Anordnung gemäß Fig. 9 mit steigendem Mediumsdruck in ähnlichem Maße zu. Zudem ist auch bei relativ geringem Mediumsdruck eine ausreichend hohe Anpresskraft zwischen der Stange 5 und der ersten Dichtlippe 12 und der zweiten Dichtlippe 13 gewährleistet. Diese liegt bei 0 bar Mediumsdruck im Bereich von 0,6 bzw. 0,8.

Die erfindungsgemäße Lösung bietet somit den Vorteil, dass die Anpresskraft zwischen der Stange 5 und der ersten Dichtlippe 12 und der zweiten Dichtlippe 13 auch bei tiefen Drücken ausreichend ist, um eine Leckage zu vermeiden und/oder ein Abkippen der Dichtlippen 12, 13 zu vermeiden, und gleichzeitig bei zunehmendem Mediumsdruck die Anpresskraft zwischen der ersten Dichtlippe 12 bzw. der zweiten Dichtlippe 13 und der Stange 5 nicht übermäßig zunimmt und auch nicht inhomogen zunimmt. Dadurch wird ein zu starker Verschleiß der Stangendichtung 7 im Bereich der Dichtlippen 12, 13 aufgrund einer zu hohen Anpresskraft vermieden. Über den untersuchten Druckbereich von 0 bar bis 40 bar verändern sich die Anpresskräfte bei der erfindungsgemäße Lösung im Bereich der zweiten Dichtlippe 13 relativ gering, nämlich nur im Bereich von 0,6 bis etwa 1,0, wohingegen bei der Lösung gemäß Fig. 7 sich die Anpresskraft im Bereich der zweiten Dichtlippe 13 von 0,1 bis 1,0 ändert.

Der Quadring 16 sorgt als Vorspannelement dafür, dass bereits im drucklosen Zustand bzw. bei niedrigen Mediumsdrücken eine gleichmäßige Vorspannung beider Dichtlippen 12, 13 gewährleistet ist. Ferner verhindert der Quadring 16, dass fließfähiges Medium in den Bereich des Anlageabschnitts 14 gelangt und somit auf den Anlageabschnitt 14 einwirkt, wodurch die Abhängigkeit der Dichtwirkung der Stangendichtung 7 von dem anliegenden Mediumsdruck weiter reduziert wird.

### Bezugszeichenliste

- 1: Abgabevorrichtung
- 2: Kavität
- 3: O-Ring
- 4: Ausgabeöffnung
- 5: Stange
- 5a: erster Stangenabschnitt
- 5b: zweiter Stangenabschnitt
- 6: Dichtabschnitt
- 7: Stangendichtung
- 8: Antrieb
- 9: Lagerabschnitt
- 10: Gehäuseteil
- 11: Dichtabschnitt
- 12: erste Dichtlippe
- 13: zweite Dichtlippe
- 14: Anlageabschnitt
- 15: Stützfläche der Ableitstruktur
- 16: Klemmelement
- 17: Längsachse
- 18: Mantelfläche der Stangendichtung
- 19: Mittelachse
- 20: Vorsprung
- 21: Endfläche
- 22: Rücksprung
- 23: Antriebsgehäuse
- 24: Kolben
- 25: Lagertasche
- 26: Hinterschnitt
- 27: Ende
- 28: Ende
- 29: Ableitstruktur
- 30: Doppelpfeil

- D_{α}: Durchmesser
- D_{β}: Durchmesser
- D_{γ}: Durchmesser
- D1: Innendurchmesser
- D2: Innendurchmesser

- α: Winkel
- β: Winkel
- γ: Winkel

- X: axiale Richtung

## Patentansprüche

1. Dichtungsanordnung mit einem Gehäuse, einer in dem Gehäuse (9, 10) ausgebildeten Kavität (2), die der Aufnahme eines fließfähigen Mediums dient, und mit einer Stangendichtung (7) zur Abdichtung der Kavität (2) im Bereich einer Stange (5), wobei die Stange (5) in einer axialen Richtung (X) der Stange (5) bewegbar in dem Gehäuse (9, 10) gelagert ist, wobei das Gehäuse (9, 10) einen Lagerabschnitt (9) aufweist, wobei die Stangendichtung (7) in dem Lagerabschnitt (9) ortsfest gelagert ist, wobei die Stange (5) den Lagerabschnitt (9) und die Stangendichtung (7) durchsetzt, sodass ein erster Stangenabschnitt (5a) der Stange (5) und ein zweiter Stangenabschnitt (5b) der Stange (5) auf unterschiedlichen Seiten des Lagerabschnitts (9) angeordnet sind, wobei sich der erste Stangenabschnitt (5a) auf einer der Kavität (2) zugewandten Seite des Lagerabschnitts (9) befindet und wobei sich der zweite Stangenabschnitt (5b) auf einer der Kavität (2) abgewandten Seite des Lagerabschnitts (9) befindet, wobei die Stangendichtung (7) auf der der Kavität (2) zugewandten Seite des Lagerabschnitts (9) angeordnet ist, wobei die Stangendichtung (7) eine erste Dichtlippe (12) und eine zweite Dichtlippe (13) aufweist, wobei die Dichtlippen (12, 13) in der axialen Richtung (X) voneinander beabstandet sind, wobei die Dichtlippen (12, 13) die Stange (5) umlaufend kontaktieren, wobei der Lagerabschnitt (9) auf seiner der Kavität (2) zugewandten Seite eine Ableitstruktur (29) mit einer die Stange (5) umlaufend umschließenden Stützfläche (15) aufweist, wobei die Stangendichtung (7) an der Stützfläche (15) anliegt, wobei ein Durchmesser (D_{α}) der Stützfläche (15) in Richtung des zweiten Stangenabschnitts (5b) zunimmt, wobei die Dichtungsanordnung ein elastisch verformbares Klemmelement (16) aufweist, wobei das Klemmelement (16) auf einer der Stange (5) abgewandten Mantelfläche (18) der Stangendichtung (7) umlaufend an der Stangendichtung (7) anliegt und die Dichtlippen (12, 13) an die Stange (5) andrückt, **dadurch gekennzeichnet, dass** das Klemmelement (16) zwei nach radial innen hervorstehende Vorsprünge (20) aufweist, wobei das Klemmelement (16) derart angeordnet ist, dass der eine Vorsprung (20) auf die erste Dichtlippe (12) einwirkt, derart, dass die erste Dichtlippe (12) an die Stange (5) angedrückt wird, und der andere Vorsprung (20) auf die zweite Dichtlippe (13) einwirkt, derart, dass die zweite Dichtlippe (13) an die Stange (5) angedrückt wird.

2. Dichtungsanordnung nach Anspruch 1, wobei ein von der Stützfläche (15) und einer in axialer Richtung (X) verlaufenden Längsachse (17) der Stange (5) eingeschlossener Winkel (α) 60° bis 85° beträgt.

3. Dichtungsanordnung nach Anspruch 1 oder 2, wobei die Stützfläche (15) der Mantelfläche eines Kegelstumpfs mit kreisförmiger Grundfläche entspricht.

4. Dichtungsanordnung nach einem der Ansprüche 1 bis 3, wobei das Klemmelement (16) auf einer der Stützfläche (15) der Ableitstruktur (29) abgewandten Seite der Stangendichtung (7) an der Stangendichtung (7) anliegt und einen zwischen der Stützfläche (15) der Ableitstruktur (29) und dem Klemmelement (16) ausgebildeten Anlageabschnitt (14) der Stangendichtung (7) an die Stützfläche (15) der Ableitstruktur (29) andrückt.

5. Dichtungsanordnung nach einem der Ansprüche 1 bis 4, wobei die Stützfläche (15) durch eine Rotationsfläche beschreibbar ist, die durch Rotation einer Kurve um eine durch die Längsachse (17) der Stange (5) gebildete Rotationsachse entsteht.

6. Dichtungsanordnung nach einem der Ansprüche 1 bis 5, wobei das Klemmelement (16) in einer durch den Lagerabschnitt (9) und/oder durch die Stangendichtung (7) gebildeten Lagertasche (25) gelagert ist.

7. Dichtungsanordnung nach einem der Ansprüche 1 bis 6, wobei ein Material des Klemmelements (16) eine niedrigere Shore-Härte aufweist als ein Material der Stangendichtung (7).

8. Dichtungsanordnung nach einem der Ansprüche 1 bis 7, wobei das Klemmelement (16) als ein Dichtring (16) ausgebildet ist.

9. Dichtungsanordnung nach Anspruch 8, wobei der Dichtring (16) als Quadring ausgebildet ist.

10. Dichtungsanordnung nach einem der Ansprüche 1 bis 9, wobei das Klemmelement (16) radial außen den Lagerabschnitt (9) kontaktiert.

11. Dichtungsanordnung nach einem der Ansprüche 1 bis 10, wobei zwischen der Stangendichtung (7) und dem Lagerabschnitt (9) ein in Richtung der Kavität (2) offener Hohlraum gebildet ist oder die Stangendichtung (7) einen in Richtung der Kavität (2) offenen Hohlraum aufweist, wobei das Klemmelement (16) diesen Hohlraum gegenüber der Kavität (2) abdichtet.

12. Ausgabevorrichtung (1) zum Ausgeben eines fließfähigen Mediums aufweisend eine Dichtungsanordnung nach einem der Ansprüche 1 bis 11, wobei die Ausgabevorrichtung (1) eine in die Kavität (2) mündende Ausgabeöffnung (4) zum Ausgeben des in der Kavität (2) befindlichen fließfähigen Mediums aus der Kavität (2) aufweist, wobei die Stange (5) zwischen einer ersten Endstellung und einer zweiten Endstellung in der axialen Richtung (X) und umgekehrt bewegbar in dem Gehäuse (9, 10) gelagert ist, wobei die Stange (5) einen Dichtabschnitt (6) aufweist, wobei der Dichtabschnitt (6) in der ersten Endstellung die Ausgabeöffnung (4) verschließt und in der zweiten Endstellung beabstandet von der Ausgabeöffnung (4) angeordnet ist, wobei die Ausgabevorrichtung (1) einen Antrieb (8) aufweist, wobei der Antrieb (8) mit der Stange (5) wirkverbunden ist zum Bewegen der Stange (5) von der ersten Endstellung in die zweite Endstellung und umgekehrt.

13. Stangendichtung (7) zur Verwendung bei einer Dichtungsanordnung nach einem der Ansprüche 9 bis 11, wobei die Stangendichtung (7) eine in einer axialen Richtung (X) verlaufende Mittelachse (19) und mindestens zwei in der axialen Richtung (X) voneinander beabstandete die Mittelachse (19) umlaufend umschließende nach radial innen gerichtete Dichtlippen (12, 13) aufweist, wobei die Stangendichtung (7) zwei in der axialen Richtung gegenüberliegende Enden (27, 28) aufweist, wobei ein endseitiger Anlageabschnitt (14) eine die Mittelachse (19) umlaufend umschließende Endfläche (21) zum endseitigen Abstützen der Stangendichtung (7) an der Stützfläche (15) des Lagerabschnitts (29) aufweist, wobei ein Durchmesser (D_{γ}) der Endfläche (21) in Richtung des anderen Endes (28) der zwei Enden (27, 28) abnimmt, **dadurch gekennzeichnet, dass** der Anlageabschnitt (14) zwei die Mittelachse (19) umlaufend umschließende Rücksprünge (22) aufweist, die zur Aufnahme von umlaufenden Vorsprüngen (20) eines als Quadring ausgebildeten Klemmelements (16) dienen.

14. Stangendichtung (7) nach Anspruch 13, wobei die Stangendichtung (7) auf einer der Mittelachse (19) abgewandten Seite eine die Mittelachse umlaufend umschließende Mantelfläche (18) aufweist, wobei ein Durchmesser (D_{β}) der Mantelfläche (18) in Richtung des anderen Endes (28) zunimmt.

15. Stangendichtung (7) nach Anspruch 13 oder 14, wobei ein von der Endfläche (21) und der Mittelachse (19) der Stangendichtung (7) eingeschlossener Winkel (γ) 60° bis 85° beträgt.

## Claims

1. Sealing arrangement having a housing, a cavity (2) which is formed in the housing (9, 10) and which serves to receive a flowable medium, and having a rod seal (7) for sealing the cavity (2) in the region of a rod (5), wherein the rod (5) is supported in the housing (9, 10) so as to be able to be moved in an axial direction (X) of the rod (5), wherein the housing (9, 10) has a bearing portion (9), wherein the rod seal (7) is supported in a fixed manner in the bearing portion (9), wherein the rod (5) extends through the bearing portion (9) and the rod seal (7) so that a first rod portion (5a) of the rod (5) and a second rod portion (5b) of the rod (5) are arranged at different sides of the bearing portion (9), wherein the first rod portion (5a) is located at a side of the bearing portion (9) facing the cavity (2) and wherein the second rod portion (5b) is located at a side of the bearing portion (9) facing away from the cavity (2), wherein the rod seal (7) is arranged at the side of the bearing portion (9) facing the cavity (2), wherein the rod seal (7) has a first sealing lip (12) and a second sealing lip (13), wherein the sealing lips (12, 13) are spaced apart from each other in the axial direction (X), wherein the sealing lips (12, 13) circumferentially contact the rod (5), wherein the bearing portion (9) has at the side thereof facing the cavity (2) a discharge structure (29) having a support face (15) which circumferentially surrounds the rod (5), wherein the rod seal (7) is in abutment with the support face (15), wherein a diameter (D_{α}) of the support face (15) increases in the direction of the second rod portion (5b), wherein the sealing arrangement has a resiliently deformable clamping element (16), wherein the clamping element (16) is in circumferential abutment with the rod seal (7) on a covering face (18) of the rod seal (7) facing away from the rod (5) and presses the sealing lips (12, 13) against the rod (5), **characterized in that** the clamping element (16) has two radially inwardly protruding projections (20), wherein the clamping element (16) is arranged in such a manner that one projection (20) acts on the first sealing lip (12) in such a manner that the first sealing lip (12) is pressed against the rod (5) and the other projection (20) acts on the second sealing lip (13) in such a manner that the second sealing lip (13) is pressed against the rod (5).

2. Sealing arrangement according to Claim 1, wherein an angle (α) enclosed by the support face (15) and a longitudinal axis (17) of the rod (5) which extends in an axial direction (X) is from 60° to 85°.

3. Sealing arrangement according to Claim 1 or 2, wherein the support face (15) corresponds to the covering face of a truncated cone having a circular base face.

4. Sealing arrangement according to any one of Claims 1 to 3, wherein the clamping element (16) is in abutment with the rod seal (7) at a side of the rod seal (7) facing away from the support face (15) of the discharge structure (29) and presses an abutment portion (14) of the rod seal (7) formed between the support face (15) of the discharge structure (29) and the clamping element (16) against the support face (15) of the discharge structure (29).

5. Sealing arrangement according to any one of Claims 1 to 4, wherein the support face (15) can be described by a rotation face which is produced by means of rotation of a curved line about a rotation axis formed by the longitudinal axis (17) of the rod (5).

6. Sealing arrangement according to any one of Claims 1 to 5, wherein the clamping element (16) is supported in a bearing pocket (25) formed by the bearing portion (9) and/or by the rod seal (7).

7. Sealing arrangement according to any one of Claims 1 to 6, wherein a material of the clamping element (16) has a lower Shore hardness than a material of the rod seal (7).

8. Sealing arrangement according to any one of Claims 1 to 7, wherein the clamping element (16) is in the form of a sealing ring (16).

9. Sealing arrangement according to Claim 8, wherein the sealing ring (16) is in the form of a quad ring.

10. Sealing arrangement according to any one of Claims 1 to 9, wherein the clamping element (16) contacts the bearing portion (9) at the radially outer side.

11. Sealing arrangement according to any one of Claims 1 to 10, wherein a hollow space which is open in the direction of the cavity (2) is formed between the rod seal (7) and the bearing portion (9) or the rod seal (7) has a hollow space which is open in the direction of the cavity (2), wherein the clamping element (16) seals this hollow space with respect to the cavity (2).

12. Output apparatus (1) for discharging a flowable medium, having a sealing arrangement according to any one of Claims 1 to 11, wherein the output apparatus (1) has a discharge opening (4) which opens in the cavity (2) for discharging the flowable medium in the cavity (2) from the cavity (2), wherein the rod (5) is supported in the housing (9, 10) so as to be able to be moved between a first end position and a second end position in the axial direction (X), and vice versa, wherein the rod (5) has a sealing portion (6), wherein the sealing portion (6) closes the discharge opening (4) in the first end position and is arranged to be spaced apart from the discharge opening (4) in the second end position, wherein the output apparatus (1) has a drive (8), wherein the drive (8) is operationally connected to the rod (5) in order to move the rod (5) from the first end position into the second end position, and vice versa.

13. Rod seal (7) for use in a sealing arrangement according to any one of Claims 9 to 11, where the rod seal (7) has a centre axis (19) which extends in an axial direction (X) and at least two radially inwardly directed sealing lips (12, 13) which are spaced apart from each other in the axial direction (X) and which circumferentially surround the centre axis (19), wherein the rod seal (7) has two ends (27, 28) which are opposite each other in the axial direction, wherein an end-side abutment portion (14) has an end face (21) which circumferentially surrounds the centre axis (19) for end-side support of the rod seal (7) on the support face (15) of the bearing portion (29), wherein a diameter (D_{γ}) of the end face (21) decreases in the direction of the other end (28) of the two ends (27, 28), **characterized in that** the abutment portion (14) has two recesses (22) which circumferentially surround the centre axis (19) and which serve to receive circumferential projections (20) of a clamping element (16) in the form of a quad ring.

14. Rod seal (7) according to Claim 13, wherein the rod seal (7) at a side facing away from the centre axis (19) has a covering face (18) which circumferentially surrounds the centre axis, wherein a diameter (D_{β}) of the covering face (18) increases in the direction of the other end (28).

15. Rod seal (7) according to Claim 13 or 14, wherein an angle (γ) enclosed by the end face (21) and the centre axis (19) of the rod seal (7) is from 60° to 85°.

## Revendications

1. Ensemble d'étanchéité comprenant un boîtier, une cavité (2) qui est ménagée dans le boîtier (9, 10) et qui sert à recevoir un milieu apte à l'écoulement, et une garniture d'étanchéité de tige (7) destinée à étanchéifier la cavité (2) au niveau d'une tige (5), la tige (5) étant montée dans le boîtier (9, 10) de manière à pouvoir se déplacer dans une direction axiale (X) de la tige (5), le boîtier (9, 10) comportant une portion formant palier (9), la garniture d'étanchéité de tige (7) étant montée de manière fixe dans la portion formant palier (9), la tige (5) traversant la portion formant palier (9) et la garniture d'étanchéité de tige (7) de sorte qu'une première portion (5a) de la tige (5) et une deuxième portion (5b) de la tige (5) soient disposées sur différents côtés de la portion formant palier (9), la première portion de tige (5a) étant située sur un côté de la portion formant palier (9) qui est dirigé vers la cavité (2) et la deuxième portion de tige (5b) étant située sur un côté de la portion formant palier (9) qui est opposé à la cavité (2), la garniture d'étanchéité de tige (7) étant disposée sur le côté de la portion formant palier (9) qui est dirigé vers la cavité (2), la garniture d'étanchéité de tige (7) comportant une première lèvre d'étanchéité (12) et une deuxième lèvre d'étanchéité (13), les lèvres d'étanchéité (12, 13) étant espacées l'une de l'autre dans la direction axiale (X), les lèvres d'étanchéité (12, 13) venant en contact avec la tige (5) tout autour de celle-ci, la portion formant palier (9) comportant sur son côté qui est dirigé vers la cavité (2) une structure de déviation (29) pourvue d'une surface d'appui (15) enfermant périphériquement la tige (5), la garniture d'étanchéité de tige (7) étant en appui sur la surface d'appui (15), un diamètre (D_{α}) de la surface d'appui (15) augmentant en direction de la deuxième portion de tige (5b), l'ensemble d'étanchéité comportant un élément de serrage (16) déformable élastiquement, l'élément de serrage (16) étant en appui sur la garniture d'étanchéité de tige (7) tout autour d'une surface latérale (18) de la garniture d'étanchéité de tige (7) qui est opposée à la tige (5) et pressant les lèvres d'étanchéité (12, 13) sur la tige (5), **caractérisé en ce que** l'élément de serrage (16) comporte deux saillies (20) qui font saillie radialement vers l'intérieur, l'élément de serrage (16) étant disposé de telle sorte qu'une saillie (20) agisse sur la première lèvre d'étanchéité (12) de manière que la première lèvre d'étanchéité (12) soit pressée contre la tige (5), et de telle sorte que l'autre saillie (20) agisse sur la deuxième lèvre d'étanchéité (13) de manière que la deuxième lèvre d'étanchéité (13) soit pressée contre la tige (5).

2. Ensemble d'étanchéité selon la revendication 1, un angle (α) formé par la surface d'appui (15) et un axe longitudinal (17) de la tige (5) qui s'étend dans la direction axiale (X) étant de 60° à 85°.

3. Ensemble d'étanchéité selon la revendication 1 ou 2, la surface d'appui (15) correspondant à la surface latérale d'un tronc de cône à base circulaire.

4. Ensemble d'étanchéité selon l'une des revendications 1 à 3, l'élément de serrage (16) étant en appui sur la garniture d'étanchéité de tige (7) sur un côté de la garniture d'étanchéité de tige (7) qui est opposé à la surface d'appui (15) de la structure de déviation (29) et pressant une portion d'appui (14) de la garniture d'étanchéité de tige (7), formée entre la surface d'appui (15) de la structure de déviation (29) et l'élément de serrage (16), sur la surface d'appui (15) de la structure de déviation (29).

5. Ensemble d'étanchéité selon l'une des revendications 1 à 4, la surface d'appui (15) pouvant être décrite par une surface de rotation qui est créée par rotation d'une courbe sur un axe de rotation formé par l'axe longitudinal (17) de la tige (5).

6. Ensemble d'étanchéité selon l'une des revendications 1 à 5, l'élément de serrage (16) étant monté dans une poche de palier (25) qui est formée par la portion de palier (9) et/ou par la garniture d'étanchéité de tige (7).

7. Ensemble d'étanchéité selon l'une des revendications 1 à 6, une matière de l'élément de serrage (16) ayant une dureté Shore inférieure à celle d'une matière de la garniture d'étanchéité de tige (7).

8. Ensemble d'étanchéité selon l'une des revendications 1 à 7, l'élément de serrage (16) étant conçu comme une bague d'étanchéité (16).

9. Ensemble d'étanchéité selon la revendication 8, la bague d'étanchéité (16) étant conçue comme une bague quadrilobe.

10. Ensemble d'étanchéité selon l'une des revendications 1 à 9, l'élément de serrage (16) étant en contact avec la portion formant palier (9) radialement vers l'extérieur.

11. Ensemble d'étanchéité selon l'une des revendications 1 à 10, une cavité ouverte en direction de la cavité (2) étant ménagée entre la garniture d'étanchéité de tige (7) et la portion formant palier (9) ou la garniture d'étanchéité de tige (7) comportant une cavité ouverte en direction de la cavité (2), l'élément de serrage (16) étanchéifiant cette cavité par rapport à la cavité (2).

12. Dispositif de délivrance (1) destiné à délivrer un milieu apte à l'écoulement et comportant un ensemble d'étanchéité selon l'une des revendications 1 à 11, le dispositif de délivrance (1) comportant une ouverture de délivrance (4) qui débouche dans la cavité (2) et qui est destinée à délivrer le milieu apte à l'écoulement, situé dans la cavité (2), à partir de la cavité (2), la tige (5) étant montée dans le boîtier (9, 10) de manière à pouvoir se déplacer entre une première position finale et une deuxième position finale dans la direction axiale (X) et vice versa, la tige (5) comportant une portion d'étanchéité (6), la portion d'étanchéité (6) fermant l'ouverture de délivrance (4) dans la première position finale et étant disposée à distance de l'ouverture de délivrance (4) dans la deuxième position finale, le dispositif de délivrance (1) comportant un entraînement (8), l'entraînement (8) étant relié fonctionnellement à la tige (5) pour déplacer la tige (5) de la première position finale à la deuxième position finale et vice versa.

13. Garniture d'étanchéité de tige (7) destinée à être utilisée dans un ensemble d'étanchéité selon l'une des revendications 9 à 11, la garniture d'étanchéité de tige (7) comportant un axe central (19) qui s'étend dans une direction axiale (X) et au moins deux lèvres d'étanchéité (12, 13) qui sont dirigées radialement vers l'intérieur, qui entourent l'axe central (19) et qui sont espacées l'une de l'autre dans la direction axiale (X), la garniture d'étanchéité de tige (7) comportant deux extrémités (27, 28) opposées l'une à l'autre dans la direction axiale, une portion d'appui côté extrémité (14) comportant une surface d'extrémité (21) qui entoure périphériquement l'axe central (19) et qui est destinée à supporter côté extrémité la garniture d'étanchéité de tige (7) sur la surface d'appui (15) de la portion formant palier (29), un diamètre (D_{γ}) de la surface d'extrémité (21) diminuant en direction de l'autre extrémité (28) des deux extrémités (27, 28),
**caractérisée en ce que**
la portion d'appui (14) comporte deux évidements (22) qui enferment périphériquement l'axe central (19) et qui servent à recevoir des saillies périphériques (20) d'un élément de serrage (16) réalisé sous la forme d'une bague quadrilobe.

14. Garniture d'étanchéité de tige (7) selon la revendication 13, la garniture d'étanchéité de tige (7) comportant sur un côté opposé à l'axe central (19) une surface latérale (18) qui enferme périphériquement l'axe central, un diamètre (D_{β}) de la surface latérale (18) augmentant en direction de l'autre extrémité (28).

15. Garniture d'étanchéité de tige (7) selon la revendication 13 ou 14, un angle (γ) formé par la surface d'extrémité (21) et l'axe central (19) de la garniture d'étanchéité de tige (7) étant compris entre 60° et 85°.
